# Europäisches Patentamt
## European Patent Office
## Office européen des brevets

(11) Veröffentlichungsnummer: **0 197 361**
**B1**

(12) **EUROPÄISCHE PATENTSCHRIFT**

(45) Veröffentlichungstag der Patentschrift:
**19.07.89**

(21) Anmeldenummer: **86103564.0**

(22) Anmeldetag: **17.03.86**

(51) Int. Cl.⁴: **G11B 5/64**, G11B 5/704

(54) Senkrecht zu magnetisierendes Aufzeichnungsmedium und Verfahren zu dessen Herstellung.

(30) Priorität: **29.03.85 DE 3511657**

(43) Veröffentlichungstag der Anmeldung:
**15.10.86 Patentblatt 86/42**

(45) Bekanntmachung des Hinweises auf die Patenterteilung:
**19.07.89 Patentblatt 89/29**

(84) Benannte Vertragsstaaten:
**AT CH DE FR GB IT LI NL SE**

(56) Entgegenhaltungen:
**EP-A- 0 054 640**
**EP-A- 0 126 790**
**DE-A- 3 129 310**
**DE-A- 3 140 344**
**FR-A- 2 542 900**

(73) Patentinhaber: **Siemens Aktiengesellschaft Berlin und München, Wittelsbacherplatz 2, D-8000 München 2(DE)**

(72) Erfinder: **Lenhart, Armin, Dr. Dipl.-Ing., Schweidnitzer Weg 9, D-8520 Erlangen(DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Die Erfindung bezieht sich auf ein senkrecht zu magnetisierendes Aufzeichnungsmedium mit einem plattenförmigen Trägerkörper aus nicht-magnetischem Material, dessen mindestens eine Flachseite mit einer dünnen nicht-magnetischen Zwischenschicht mit sehr glatter Oberfläche versehen ist, auf welcher mindestens eine magnetische Aufzeichnungsschicht aus einem Material aufgebracht ist, dessen Achse der leichten Magnetisierung in senkrechte Richtung bezüglich der Oberfläche des Mediums weist. Ein derartiges Aufzeichnungsmedium geht z.B. aus der DE-C 2 923 682 hervor. Die Erfindung betrifft ferner Verfahren zur Herstellung solcher Aufzeichnungsmedien.

Das Prinzip der senkrechten Magnetisierung zur Speicherung von Informationen in besonderen Aufzeichnungsmedien ist allgemein bekannt (vgl. z.B. "IEEE Transactions on Magnetics", Vol. MAG-16, Nr. 1, Januar 1980, Seiten 71 bis 76 oder die US-A 4 287 544). Die für dieses vielfach auch als vertikale Magnetisierung bezeichnete Prinzip vorzusehenden Aufzeichnungsmedien können z.B. in Form von starren Magnetspeicherplatten vorliegen. Ein entsprechendes Aufzeichnungsmedium weist mindestens eine magnetisierbare Aufzeichnungsschicht vorbestimmter Dicke auf, welche ein magnetisch anisotropes Material, insbesondere auf einer COCr-Legierung, enthält. Dabei ist die Achse der sogenannten leichten Magnetisierung dieser Schicht senkrecht zur Oberfläche des Mediums gerichtet. Mittels besonderer Magnetköpfe können dann längs einer Spur die einzelnen Informationen als Bits in aufeinanderfolgenden Abschnitte, auch Zellen oder Blöcke genannt, durch entsprechende Magnetisierung der Aufzeichnungsschicht eingeschrieben werden. Die Bits haben dabei eine vorbestimmte, auch als Wellenlänge bezeichnete Ausdehnung in Längsrichtung der Spur. Diese Ausdehnung kann im Vergleich zu der Grenze, die bei einer Speicherung nach dem bekannten Prinzip der longitudinalen (horizontalen) Magnetisierung durch die Entmagnetisierung gegeben ist, wesentlich kleiner sein. Somit läßt sich durch senkrechte Magnetisierung die Informationen in den besonderen Aufzeichnungsmedien entsprechend vergrößern.

Die ein- oder beidseitig mit der mindestens einen magnetischen Aufzeichnungsschicht versehenen Aufzeichnungsmedien müssen extrem glatte Oberflächen aufweisen, um so Schwierigkeiten bei der Führung der Magnetköpfe über diese Oberflächen hinweg zu vermeiden (vgl. die genannte DE-C). Die auch als Flughöhe bezeichnete Führungshöhe der Köpfe liegt nämlich dabei im allgemeinen unter 1 μm. Folglich muß auch der plattenförmige Trägerkörper oder eine auf ihm aufgebrachte Zwischenschicht, auf der dann die mindestens eine Aufzeichnungsschicht abzuschneiden ist, eine entsprechend geringe Oberflächenrauhigkeit haben. Die Trägerkörper bzw. die Zwischenschicht werden deshalb im allgemeinen zu einer entsprechend glatten Spiegelfläche poliert.

Dementsprechend wird bei dem aus der genannten DE-C 2 923 682 bekannten Aufzeichnungsmedium zunächst dessen als Grundplatte bezeichneter plattenförmiger Trägerkörper aus nicht-magnetischem Material wie z.B. aus einer Al-Legierung auf mindestens einer seiner Flachseiten einem Abdreh- und Wärmeglättungsverfahren unterzogen.

Auf den so vorbehandelten Trägerkörper wird dann eine Zwischenschicht aus einem nicht-magnetischen Material wie z.B. Nickel-Phosphor mit einer Dicke von etwa 50 μm aufplattiert. Diese Zwischenschicht wird anschließend durch mechanisches Polieren zu einer Spiegelfläche mit einer Oberflächenrauhigkeit von 0,04 μm oder weniger und einer Dicke von etwa 30 μm fein bearbeitet. Auf diese Spiegelfläche werden dann mehrere Aufzeichnungsschichten aus einem magnetischen Metall aufgebracht, wobei deren Achse der leichten Magnetisierung in senkrechter Richtung bezüglich der Oberfläche des Aufzeichnungsmediums verläuft. Auf diesen so erhaltenen schichtweisen Aufbau wird zuletzt noch eine besondere Schutzschicht abgeschieden. Bei der Herstellung dieses bekannten Aufzeichnungsmediums ist jedoch der Verfahrensschritt zur Polierung der Zwischenschicht, wobei besondere Zwischenglühungen vorzunehmen sind, verhältnismäßig aufwendig.

Ferner ist aus der DE-A 3 014 718 eine mehrschichtige magnetische Dünnfilmplatte als Aufzeichnungsmedium bekannt, deren plattenförmiger Trägerkörper als Aluminium oder einer Aluminiumlegierung, insbesondere aus der Aluminium-Magnesium-Legierung AlMg$_5$, besteht. Dieser Trägerkörper ist mit einer dünnen Schicht von z.B. 1 μm Dicke aus einem Kunstharz überzogen, auf der dann mindestens eine metallische Magnetschicht als Aufzeichnungsschicht aufgebracht ist. Damit über diese Dünnfilmplatte störungsfrei ein Magnetkopf in der geforderten geringen Flughöhe hinweggeführt werden kann, muß auch der Trägerkörper dieser Platte zwangsläufig einem geeigneten Polierverfahren unterzogen worden sein, das insbesondere ein sogenanntes Glanzdrehen sein kann. Dabei besteht jedoch die Gefahr, daß sich das verhältnismäßig weiche Material der bevorzugt verwendeten AlMg-Legierung plastisch verformt, d.h., daß sich der plattenförmige Trägerkörper wellt.

Aus der DE-A 3 129 310 ist ein Aufzeichnungsmedium zu entnehmen, das einen Träger aus einer Kunststoffolie aufweist, auf dem eine dünne Glasschicht abgeschieden ist. Um eine angestrebte Flexibilität dieses Aufbaus zu gewährleisten, darf dabei die Stärke der Glasschicht 5 μm nicht überschreiten. Ein entsprechender Aufbau kann jedoch für starre, plattenförmige Aufzeichnungsmedien nicht vorgesehen werden, die eine hinreichende Ebenheit ihrer Oberflächen erfordern.

Auch ein aus der DE-A 3 140 344 bekanntes Aufzeichnungsmedium weist keine Maßnahmen zur Ausbildung hinreichend ebener Oberflächen auf. Bei diesem Aufzeichnungsmedium wird lediglich eine optisch transparente Schicht, z.B. aus Glas, zur Übertragung von Daten eingesetzt.

Bei einer aus der FR-A 2 542 900 zu entnehmenden Platte wird eine 0,8 mm bis 2,2 mm dicke Glasscheibe als Trägerkörper eingesetzt. Hierbei sind aber Dickeschwankungen der Glasscheibe bis zu 0,05 mm zugelassen. Solche Dickeschwankungen bzw. die damit verbundenen Unebenheiten sind jedoch für ein plattenförmiges Aufzeichnungsmedium, über das aerodynamisch ein Magnetkopf hinwegzuführen ist, nicht tolerierbar.

Aufgabe der vorliegenden Erfindung ist es, ein Aufzeichnungsmedium der eingangs genannten Art zu schaffen, dessen Zwischenschicht auf verhältnismäßig einfache Weise mit einer sehr glatten Oberfläche versehen werden kann.

Diese Aufgabe wird erfindungsgemäß mit den im Kennzeichen des Hauptanspruchs angegebenen Maßnahmen gelöst.

Die mit der erfindungsgemäßen Ausgestaltung des Aufzeichnungsmediums verbundenen Vorteile sind insbesondere darin zu sehen, daß der plattenförmige Trägerkörper auf einfache Weise mit der nicht-magnetischen Zwischenschicht aus Glas versehen werden kann. Die Oberfläche dieses Glases, auf die die mindestens eine magnetische Aufzeichnungsschicht aufzubringen ist, läßt sich ohne weiteres durch Polieren sehr glatt arbeiten.

Das erfindungsgemäße Aufzeichnungsmedium läßt sich vorteilhaft dadurch herstellen, daß der Trägerkörper mit der aus der Glasscheibe bestehenden Zwischenschicht verklebt wird, bevor auf diesen so gebildeten Magnetschichtkörper die mindestens eine magnetische Aufzeichnungsschicht aufgebracht wird. Daneben kann man vorteilhaft auch zunächst auf die aus der Glasscheibe bestehende Zwischenschicht die mindestens eine magnetische Aufzeichnungsschicht aufbringen. Die so beschichtete Glasscheibe läßt sich dann mit dem Trägerkörper verkleben.

Weitere vorteilhafte Ausgestaltungen des erfindungsgemäßen Aufzeichnungsmediums gehen aus den abhängigen Ansprüchen hervor.

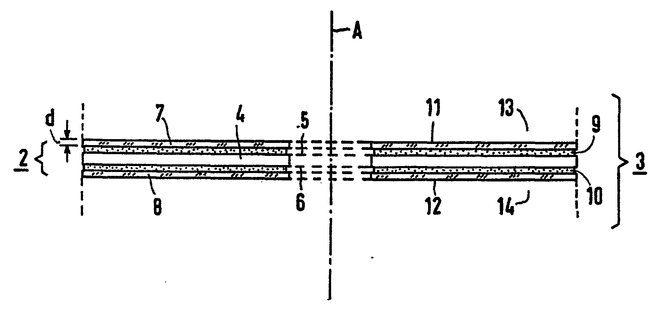

Zur weiteren Erläuterung der Erfindung und deren in den abhängigen Ansprüchen gekennzeichneten Ausgestaltungen wird auf die Zeichnung Bezug genommen, in deren Figur ein Querschnitt durch einen Teil eines erfindungsgemäßen Aufzeichnungsmediums schematisch veranschaulicht ist.

Ein in der Figur mit 2 bezeichneter Magnetschichtträger einer als Aufzeichnungsmedium 3 vorgesehenen, zu einer Achse A rotationssymmetrischen Magnetspeicherplatte weist einen sandwichartigen Aufbau auf. Er umfaßt einen zentralen plattenförmigen Trägerkörper 4 aus einem nicht-magnetischen Material. Vorzugsweise kann dieser Körper aus einer aushärtbaren Aluminiumlegierung bestehen, deren Festigkeit deutlich höher ist als die der verhältnismäßig weichen, nicht-aushärtbaren AlMg-Legierung, die beispielsweise für die aus der DE-OS 3 014 718 bekannte Magnetspeicherplatte Verwendung findet. Ein geeignetes Material ist z.B. eine AlCuMgPb-Knetlegierung mit einer Zugfestigkeit $\delta_z$ von etwa 400 N/mm² oder eine AlCuMg-Knetlegierung mit $\delta_z$ von etwa 380 N/mm², während die bekannte AlMg4-Legierung ein $\delta_z$ von nur etwa 250 N/mm² aufweist. Der Trägerkörper 4 soll außerdem glatte Flachseiten 5 und 6 mit einer Oberflächenebenheit von unter 1 bis 2 µm, vorzugsweise höchstens 500 nm besitzen. Die genannten Werte für die Oberflächenebenheit stellen dabei die maximal zulässige Abweichung der Flachseiten 5 und 6 von einer entsprechenden ideal ebenen Fläche dar. Um diese Ebenheit zu erreichen, können die Flachseiten entsprechend z.B. durch Glanzdrehen oder Läppen poliert sein. Auf den beiden glatten Flachseiten 5 und 6 dieses plattenförmigen Trägerkörpers 4 ist jeweils eine dünne Glasscheibe 7 bzw. 8 als nicht-magnetische Zwischenschicht aufgeklebt, wobei die entsprechenden Klebeschichten mit 9 bzw. 10 bezeichnet sind. Als Kleber sind bekannte Zweikomponenten-Methacrylat-Klebstoffe oder auch Einkomponenten-Epoxidharz-Kunststoffe geeignet. Die aufgeklebten Glasscheiben 7 und 8 mit einer Dicke d von z.B. höchstens 1 mm, vorzugsweise zwischen 300 µm und 600 µm, bestehen insbesondere aus Quarzglas oder aus Silikatgläsern. Sie sollen dabei sehr glatte Oberflächen 11 bzw. 12 mit einer durch die maximale Rauhtiefe $R_t$ festgelegten Oberflächenrauhigkeit von höchstens 40 nm, vorzugsweise unter 20 nm, bezogen auf eine Meßstrecke von 2 mm besitzen. Unter der Größe $R_t$ wird dabei innerhalb der vorbestimmten Meßstrecke der Abstand verstanden, der zwischen einer oberen, das Oberflächenprofil an seiner höchsten Profilerhebung berührenden Begrenzungslinie und einer dazu parallelen unteren, das Oberflächenprofil an seinem tiefsten Profiltal berührenden Begrenzungslinie ausgebildet ist (vgl. auch Entwurf 1978 DIN 4762). Auf die Oberflächen des so ausgebildeten Magnetschichtträgers 2 werden dann in bekannter Weise die für eine senkrechte (vertikale) Magnetisierung erforderlichen, in der Figur jedoch nicht näher ausgeführten Magnetschichten 13 und 14, deren Achse der leichten Magnetisierung in Normalenrichtung bezüglich der Oberflächen 11 und 12 weisen, sowie gegebenenfalls erforderliche Schutzschichten aufgebracht.

Dieses Aufbringen der magnetischen Aufzeichnungsschichten sowie der Schutzschichten kann an dem verklebten Sandwichaufbau des Magnetschichtträgers 2 in bekannter Weise, z.B. mittels Sputterverfahren, erfolgen. Es ist jedoch auch möglich, zunächst die Glasscheiben einzeln liegend jeweils auf ihrer glatten Seite mit diesen Schichten zu versehen und diese dann so beschichteten Scheiben mit dem plattenförmigen Trägerkörper zu verkleben.

Gegenüber einem durch Glanzdrehen polierten plattenförmigen Trägerkörper aus einer AlMg-Legierung gemäß der DE-OS 30 14 718 weist der erfindungsgemäße Aufbau des Magnetschichtträgers 2 eine Reihe von Vorteilen auf:

1. Die Gefahr von plastischen Verformungen beim Glanzdrehen der bekannten weichen AlMg-Platten als Trägerkörper kann durch Verwendung hochfester, ausgehärteter Al-Legierungen eliminiert werden.

2. Der aufwendige Verfahrensschritt des Glanzdrehens kann gegebenenfalls völlig entfallen oder wird zumindest stark vereinfacht.

3. Besondere Zwischenglühungen beim Glanzdrehen sind nicht erforderlich.

4. Die für das erfindungsgemäße Aufzeichnungsmedium verwendbaren aushärtbaren Al-Le-

gierungen sind im allgemeinen preiswerter als die äußerst reinen AlMg-Legierungen.

5. Da die Oberflächen 11 und 12 des Magnetschichtträgers 2 aus Glas bestehen, können diese durch an sich bekannte Polierverfahren leicht sehr glatt gearbeitet werden.

Gemäß dem dargestellten Ausführungsbeispiel wurde davon ausgegangen, daß das erfindungsgemäße Aufzeichnungsmedium einen beidseitig mit magnetischen Aufzeichnungsschichten versehenen Magnetschichtträger aufweist.

Ebensogut können jedoch auch einseitig beschichtete Aufzeichnungsmedien entsprechend ausgebildet werden.

## Patentansprüche

1. Senkrecht zu magnetisierendes Aufzeichnungsmedium (3) mit einem plattenförmigen Trägerkörper (4) aus nicht-magnetischem Material, dessen mindestens eine Flachseite (5, 6) mit einer dünnen nicht-magnetischen Zwischenschicht (7, 8) mit sehr glatter Oberfläche (11, 12) versehen ist, auf welcher mindestens eine magnetische Aufzeichnungsschicht (13, 14) aus einem Material aufgebracht ist, dessen Achse der leichten Magnetisierung in senkrechte Richtung bezüglich der Oberfläche des Mediums weist, dadurch gekennzeichnet, daß die Zwischenschicht (7, 8) aus einer mit dem Trägerkörper (4) verklebten Glasscheibe besteht, die eine Dicke (d) von mindestens 300 µm und höchstens 1 mm hat und deren mit der Aufzeichnungsschicht (13, 14) zu versehende Oberfläche (11, 12) mittels eines Polierprozesses geglättet ist.

2. Aufzeichnungsmedium nach Anspruch 1, gekennzeichnet durch einen Trägerkörper (4) aus einer hochfesten, ausgehärteten Al-Legierung.

3. Aufzeichnungsmedium nach Anspruch 2, dadurch gekennzeichnet, daß der Trägerkörper (4) aus einer AlCuMg- oder einer AlCuMgPb-Knetlegierung besteht.

4. Aufzeichnungsmedium nach einem der Ansprüche 1 bis 3, dadurch gekennzeichnet, daß die Oberflächenebenheit der der Zwischenschicht (7, 8) zugewandten Flachseite (5 bzw. 6) des Trägerkörpers (4) unter 2 µm liegt, vorzugsweise höchstens 500 nm beträgt.

5. Aufzeichnungsmedium nach einem der Ansprüche 1 bis 4, dadurch gekennzeichnet, daß die aus der Glasscheibe bestehende Zwischenschicht (7, 8) eine Dicke (d) von höchstens 600 µm hat.

6. Aufzeichnungsmedium nach einem der Ansprüche 1 bis 5, dadurch gekennzeichnet, daß die die Zwischenschicht (7, 8) bildende Glasscheibe aus Quarzglas oder Silikatglas besteht.

7. Aufzeichnungsmedium nach einem der Ansprüche 1 bis 6, dadurch gekennzeichnet, daß die auf eine Meßstrecke von 2 mm Länge bezogene maximale Rauhtiefe ($R_t$) der Oberfläche (11, 12) der aus der Glasscheibe bestehenden Zwischenschicht (7, 8) unter 40 nm, vorzugsweise unter 20 nm liegt.

8. Aufzeichnungsmedium nach einem der Ansprüche 1 bis 7, dadurch gekennzeichnet, daß die aus der Glasscheibe bestehende Zwischenschicht (7, 8) auf dem Trägerkörper (4) mittels eines Methacrylat-Klebers oder eines Epoxidharz-Kunststoffes befestigt ist.

9. Verfahren zur Herstellung eines Aufzeichnungsmediums nach einem der Ansprüche 1 bis 8, dadurch gekennzeichnet, daß der Trägerkörper (4) mit der aus der Glasscheibe bestehenden Zwischenschicht (7, 8) verklebt wird, bevor auf diesen so gebildeten Magnetschichtträger (2) die mindestens eine magnetische Aufzeichnungsschicht (13, 14) aufgebracht wird.

10. Verfahren zur Herstellung eines Aufzeichnungsmediums nach einem der Ansprüche 1 bis 8, dadurch gekennzeichnet, daß zunächst auf die aus der Glasscheibe bestehende Zwischenschicht (7, 8) die mindestens eine magnetische Aufzeichnungsschicht (13, 14) aufgebracht wird und daran anschließend die so beschichtete Glasscheibe mit dem Trägerkörper (4) verklebt wird.

## Claims

1. Recording medium (3), which is to be magnetized perpendicularly, having a plate-like carrier body (4) made of non-magnetic material, at least one flat side (5, 6) of which is provided with a thin non-magnetic intermediate layer (7, 8) with a very smooth surface (11, 12) upon which there is applied at least one magnetic recording layer (13, 14) made of a material, the axis of easy magnetization of which points in the perpendicular direction relative to the surface of the medium, characterised in that the intermediate layer (7, 8) consists of a glass disk which is glued together with the carrier body (4) and which has a thickness (d) of at least 300 µm and at most 1 mm and the surface (11, 12) of which, to be provided with the recording layer (13, 14), is smoothed by means of a polished process.

2. Recording medium according to claim 1, characterised by a carrier body (4) made of a high-strength, hardened Al-alloy.

3. Recording medium according to claim 2, characterised in that the carrier body (4) is made of an AlCuMg or an AlCuMgPb wrought alloy.

4. Recoding medium according to one of the claims 1 to 3, characterised in that the surface evenness of the flat side (5 or 6) facing the intermediate layer (7, 8) of the carrier body (4) lies under 2 µm, preferably at most 500 nm.

5. Recording medium according to one of the claims 1 to 4, characterised in that the intermediate layer (7, 8), which consists of the glass disk, has a thickness (d) of at most 600 µm.

6. Recording medium according to one of the claims 1 to 5, characterised in that the glass disk which forms the intermediate layer (7, 8) is made of quartz glass or silicate glass.

7. Recording medium according to one of the claims 1 to 6, characterised in that the maximum roughness depth ($R_t$), relative to a measured distance of 2 mm length, of the surface (11, 12) of the intermediate layer (7, 8) consisting of the glass disk lies below 40 nm, preferably below 20 nm.

8. Recording medium according to one of the claims 1 to 7, characterised in that the intermediate layer (7, 8) consisting of the glass disk is secured to the carrier body (4) by means of a methacrylate adhesive or an epoxy resin plastics material.

9. Method for producing a recording medium according to one of the claims 1 to 8, characterised in that the carrier body (4) is glued together with the intermediate layer (7, 8), which consists of the glass disk, before the at least one magnetic recording layer (13, 14) is applied to this thus formed magnetic layer carrier (2).

10. Method for producing a recording medium according to one of the claims 1 to 8, characterised in that in the first instance the at least one magnetic recording layer (13, 14) is applied to the intermediate layer (7, 8) consisting of the glass disk and subsequently the thus coated glass disk is glued together with the carrier body (4).

**Revendications**

1. Milieu d'enregistrement (3) à magnétiser perpendiculairement, comprenant un corps de support discoïde (4) en un matériau amagnétique, dont au moins une face plane (5, 6) est pourvue d'une mince couche intermédiaire amagnétique (7, 8) ayant une surface (11, 12) très lisse, sur laquelle est appliquée au moins une couche d'enregistrement magnétique (13, 14) en un matériau dont l'axe de la magnétisation facile est orienté perpendiculairement à la surface du milieu, caractérisé en ce que la couche intermédiaire (7, 8) est constituée par un disque de verre collé au corps de support (4), disque qui possède une épaisseur (d) d'au moins 300 µm et de tout au plus 1 mm et dont la surface (11, 12) à pourvoir de la couche d'enregistrement (13, 14) est lissée au moyen d'un processus de polissage.

2. Milieu d'enregistrement selon la revendication 1, caractérisé par un corps de support (4) en alliage d'aluminium durci et de grande résistance.

3. Milieu d'enregistrement selon la revendication 2, caractérisé en ce que le corps de support (4) est fait d'un alliage de corroyage AlCuMg ou AlCuMgPb.

4. Milieu d'enregistrement selon une des revendications 1 à 3, caractérisé en ce que la planéité superficielle de la face plane (5 ou 6) du corps de support (4), dirigée vers la couche intermédiaire (7, 8) est inférieure à 2 µm et est de préférence de tout au plus 500 nm.

5. Milieu d'enregistrement selon une des revendications 1 à 4, caractérisé en ce que la couche intermédiaire (7, 8), formée par le disque de verre, possède une épaisseur (d) de tout au plus 600 µm.

6. Milieu d'enregistrement selon une des revendications 1 à 5, caractérisé en ce que le disque de verre formant la couche intermédiaire (7, 8), est en verre quartzeux ou en verre aux silicates.

7. Milieu d'enregistrement selon une des revendications 1 à 6, caractérisé en ce que la profondeur maximale de rugosité ($R_t$) de la surface (11, 12) de la couche intermédiaire (7, 8), formée par le disque de verre, est inférieure à 40 nm, de préférence inférieure à 20 nm, rapporté à une longueur de mesure de 2 mm.

8. Milieu d'enregistrement selon une des revendications 1 à 7, caractérisé en ce que la couche intermédiaire (7, 8), formée par le disque de verre, est fixé sur le corps de support (4) au moyen d'une colle de méthacrylate ou d'une matière plastique à base de résine époxy.

9. Procédé pour fabriquer un milieu d'enregistrement selon une des revendications 1 à 8, caractérisé en ce que l'on réunit par collage le corps de support (4) et la couche intermédiaire (7, 8), formée par le disque de verre, avant l'application d'au moins une couche d'enregistrement magnétique (13, 14) sur le support de couche magnétique (2) ainsi formé.

10. Procédé pour fabriquer un milieu d'enregistrement selon une des revendications 1 à 8, caractérisé en ce que l'on applique d'abord au moins une couche d'enregistrement magnétique (13, 14) sur la couche intermédiaire (7, 8) formée par le disque de verre ainsi revêtu et le corps de support (4).